Europäisches Patentamt

European Patent Office

Office européen des brevets

(19)

(11) **EP 1 450 175 A2**

(12) **EUROPÄISCHE PATENTANMELDUNG**

(43) Veröffentlichungstag:
**25.08.2004 Patentblatt 2004/35**

(51) Int Cl.⁷: **G01R 33/02**

(21) Anmeldenummer: **03028725.4**

(22) Anmeldetag: **12.12.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **22.02.2003 DE 10307580**

(71) Anmelder: **Rheinmetall Defence Electronics
GmbH
28309 Bremen (DE)**

(72) Erfinder: **Härle, Norbert, Dr.
28355 Bremen (DE)**

(74) Vertreter: **Thul, Hermann, Dipl.-Phys.
Zentrale Patentabteilung,
Rheinmetall AG,
Rheinmetall Allee 1
40476 Düsseldorf (DE)**

(54) **Verfahren zum Bestimmen und Verfolgen von Position und Orientierung eines
Magnetfeldsensor**

(57) Bei einem Verfahren zum Bestimmen und Verfolgen einer von einem Magnetfeldsensor innerhalb eines dreidimensionalen Magnetfeldraums eingenommenen, sich verändernden, wahren Position und Orientierung aus den Messwerten des Magnetfeldsensors wird in einen vorausgehenden Kalibriermodus der Magnetfeldraum in einem dreidimensionalen Gitter mit äquidistanten Gitterpunkten strukturiert und werden alle Messwerte, die von dem mit konstanter Orientierung nacheinander in allen Gitterpunkten platzierten Magnetfeldsensor gemessen werden als Kalibrierposition und Kalibrierorientierungen in Zuordnung zu den realen Positionen der Gitterpunkte im Magnetfeldraum in einer Kalibriertabelle abgespeichert. Zur Erzielung eines robusten Verfahrens, das auch in stark verzerrten oder gestörten Magnetfeldern genaue Ergebnisse zur Bildberechnung für Sichtsimulatoren geeignet sind, wird für die fortlaufend gemessenen, aktuellen Messwerte des Magnetfeldsensors jeweils mit vier aus der Kalibriertabelle entnommenen Kalibrierpositionen, die ein die Messposition einschließendes Tetraeder aufspannen, eine linear interpolierende Transformation der Messposition in den realen Magnetfeldraum vorgenommen.

EP 1 450 175 A2

**Beschreibung**

Die Erfindung betrifft ein Verfahren zum Bestimmen und Verfolgen einer von einem Magnetfeldsensor innerhalb eines dreidimensionalen Magnetfeldraums eingenommenen, sich verändernden, wahren Position und Orientierung aus dem vom Magnetfeldsensor als Messposition und Messorientierung gemessenen Messwerten der im Oberbegriff des Anspruchs 1 definierten Gattung.

Zur realitätsgetreuen Simulation von Bildern, die sich mit der Änderung von Kopfposition und Kopfausrichtung bzw. Kopforientierung des Betrachters ändern, z.B. von in einer Nachsichtbrille eines Piloten dargestellten Bildausschnitten des Umweltpanoramas, muss der Augenpunkt des Betrachters, und damit dessen genaue Kopfposition und -ausrichtung, bekannt sein, um den mit der Kopfverlagerung sich ändernden Bildausschnitt richtig berechnen zu können. Hierzu wird in einem realen Raum, in dem der Betrachter sitzt, z.B. im Cockpit eines Flugzeugs oder eines Hubschraubers, ein Magnetfeld erzeugt und am Kopf des Betrachters ein Magnetfeldsensor zur Sensierung des Magnetfelds befestigt. Die von dem Magnetfeldsensor gemessenen Messwerte sind ein Maß für die momentane Kopfposition im Magnetfeldraum, der momentanen Orientierung oder Ausrichtung des Kopfes und werden im folgenden Messposition und Messorientierung genannt.

Ein solcher Magnetfeldsensor arbeitet im ungestörten, homogenen Magnetfeld einwandfrei. In den meisten Magnetfeldräumen ist jedoch das Magnetfeld infolge des Vorhandenseins von unverzichtbaren Metallteilen verzerrt, so z.B. durch die in einem originalgetreu nachgebildeten Cockpit eines Flugsimulators vorhandenen Metallstreben. Die von dem Magnetfeldsensor ausgegebenen Messwerte weichen dadurch mehr oder weniger erheblich von der wahren Position und Orientierung des Magnetfeldsensors im realen Magnetfeldraum ab. Im gestörten Magnetfeldraum ist es daher erforderlich, die vom Magnetfeldsensor ausgegebenen Messwerte zu korrigieren, um die tatsächliche, die sog. wahre Position und wahre Orientierung des Magnetfeldsensors zu erhalten, die unverzichtbar für eine realitätsgetreue Simulation der Bildausschnitte sind.

Zur Korrektur der von dem im gestörten Magnetfeld sich befindlichen Magnetfeldsensor ausgegebenen, fehlerhaften Messwerte ist eine Reihe von verschiedenen Verfahren bekannt, die jedoch nicht zu einem zumindest für eine Sichtsimulation ausreichenden und befriedigenden Ergebnis führen. Bei einem bekannten Verfahren wird der Zusammenhang zwischen der wahren Position und Orientierung des Magnetfeldsensors und den von diesem gemessenen Messwerten experimentell ermittelt und in einer Kalibriertabelle oder -tafel abgespeichert. In einer Vorverarbeitung wird der Kalibrierraum äquidistant abgetastet, und mit Hilfe der Kalibriertabelle werden durch Interpolation der Positionswerte im realen Magnetfeldraum die zugehörigen, realen Positionswerte nährungsweise gewonnen. In der Messphase wird dann eine trilineare Interpolation zwischen den aktuell gemessenen Messpositionen und den realen Positionswerten durchgeführt, um die wahre Position des Magnetfeldsensors zu erhalten. (Volodymyr Kindratenko "Calibration of electromagnetic tracking device", Virtual Reality, Research, Development, and Applications, Vol. 4, 1999, Seiten 139 - 150 unter Verweis auf Raab, Blood, Steiner, Jones:" Magnetic position and orientation tracking system; IEEE Transactions on Aerospace and Electronic Systems 1979, 15(5), Seite 709 - 718). Dieses Verfahren beruht auf der Annahme, dass die Störungen des Magnetfelds in einem Raumbereich linear sind, was jedoch nur in Ausnahmefällen zutrifft.

Der Erfindung liegt die Aufgabe zugrunde, ein robustes Verfahren zur Bestimmung der wahren Werte von Position und Orientierung eines Magnetfeldsensors aus dem vom Magnetfeldsensor ausgegebenen Messwerten anzugeben, dass auch in stark verzerrten oder gestörten Magnetfeldern für die Sichtsimulation brauchbare Ergebnisse liefert.

Die Aufgabe ist erfindungsgemäß durch die Merkmale im Anspruch 1 gelöst.

Das erfindungsgemäße Verfahren hat den Vorteil, dass die unmittelbare Umgebung des Magnetfeldsensors im realen Magnetfeldraum zur Korrektur der Messwerte herangezogen wird und dadurch das Verfahren auch bei örtlich unterschiedlich stark gestörtem Magnetfeld noch gute Ergebnisse liefert, und zwar auch unter solchen Bedingungen, bei denen die anderen Verfahren bereits versagen. Das erfindungsgemäße Verfahren liefert die wahre Position recht genau und verfolgt diese ständig, so dass auch bislang auftretende Zweideutigkeitsprobleme bei dem erfindungsgemäßen Verfahren vermieden werden. Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird mittels der vier, der Kalibriertabelle entnommenen Kalibrierpositionen, die in dem dreidimensionalen Kalibrierraum-Koordinatensystem ein die Messfeldposition einschließendes Tetraeder aufspannen, eine Transformationsmatrix A so bestimmt, dass die vier Kalibrierpositionen korrekt in das dreidimensionale Koordinatensystem des realen Magnetfeldraums, nachfolgend Realraum-Koordinatensystem genannt, transformiert werden. Zur Bestimmung der wahren Position wird dann die Transformationsmatrix A auf die Messposition angewendet.

Ist $\vec{p}^M$ der Positionsvektor der Messposition und $\vec{p}$ der Positionsvektor der transformierten Messposition, die der wahren Position des Magnetfeldsensors entspricht, so gilt

$$\vec{p} = A \cdot \vec{p}^{M} + \vec{p}^{off} \tag{1},$$

wobei $\vec{p}^{off}$ ein bei der Transformation zu berücksichtigender Offset ist.

Um die Bestimmung des Offsets zu vermeiden, wird gemäß einer vorteilhaften Ausführungsform der Erfindung vor der Transformation ein erster der vier Kalibrierpositionen in den Ursprung des Kalibrierraum-Koordinatensystems verschoben und die anderen drei Kalibrierpositionen um die Positionskoordinaten der ersten Kalibrierposition verschoben. Außerdem wird von den den vier Kalibrierposition zugehörigen Gitterpunktpositionen die der ersten Kalibrierposition zugehörige erste Gitterpunktposition in den Ursprung des Realraum-Koordinatensystems verschoben und die verbleibenden drei Gitterpunktpositionen um die Positionskoordinaten der ersten Gitterpunktposition verschoben. Die Transformation in den realen Magnetfeldraum, genauer gesagt in das dreidimensionale Koordinatensystem des realen Magnetfeldraums (Realraum-Koordinatensystem), wird mit den verschobenen Kalibrierpositionen gemäß

$$\vec{p}_i^{\ V} = A\vec{p}_i^{\ M,V} \qquad \text{mit } i = 1, 2, 3 \tag{2}$$

durchgeführt. Es ergibt sich ein Gleichungssystem aus neun Transformationsgleichungen mit neun Unbekannten, aus dem sich die Transformationsmatrix A leicht berechnen lässt. Mit jedem neuen Messwert werden die das Tetraeder aufspannenden Kalibrierpositionen neu bestimmt und wird auch die Transformationsmatrix neu berechnet.

Bei der Anwendung der Transformationsmatrix auf die Messposition muss auch letztere zuvor im Kalibrierraum-Koordinatensystem entsprechend verschoben werden. Diese Verschiebung wird nach Transformation in das Realraum-Koordinatensystem wieder rückgängig gemacht und damit die wahre Position des Magnetfeldsensors im Magnetfeldraum recht genau erhalten.

Vorteilhafte Ausgestaltungen des erfindungsgemäßen Verfahrens zum schnellen Bestimmen der Kalibrierpositionen, die das die Messposition einschließende Tetraeder aufspannen, sind in den weiteren Ansprüchen 5 - 15 angegeben.

Ist die wahre Position des Magnetfeldsensors auf Basis eines Messwerts des Magnetfeldsensors wie beschrieben bestimmt, so wird gemäß einer vorteilhaften Ausgestaltung der Erfindung mit der wahren Position des Magnetsensors eine Korrekturorientierung für den Magnetfeldsensor bestimmt und diese zur Ermittlung der wahren Orientierung des Magnetfeldsensors auf die Messorientierung angewandt.

Gemäß einer vorteilhaften Ausführungsform der Erfindung wird zur Bestimmung der Korrekturorientierung mit den Kalibrierorientierungen, deren zugeordnete Gitterpunktpositionen im Realraum-Koordinatensystem einen die wahre Position des Magnetfeldsensors einschließenden Kubus aufspannen, eine trilineare Interpolation durchgeführt.

Die Erfindung ist anhand eines in der Zeichnung illustrierten Ausführungsbeispiels des Verfahrens im folgenden näher beschrieben. Es zeigen:

Fig. 1    ein Flussdiagramm zur Darstellung des Verfahrens,

Fig. 2    ausschnittweise die Strukturierung eines Magnetfeldraums mit dem dreidimensionalen Koordinatensystem x, y, z in ein dreidimensionales Gitter mit äquidistanten Gitterpunkten,

Fig. 3    einen Ausschnitt einer im Magnetfeldraum empirisch aufgenommene Kalibriertabelle,

Fig. 4    ausschnittweise eine zweidimensionale Darstellung der Kalibrierpositionen in dem dreidimensionalen Kalibrierraum-Koordinatensystem der Kalibriertabelle zur Erläuterung der Kumulierungsposition,

Fig. 5    ein Beispiel eines von acht Gitterpunktpositionen im dreidimensionalen Koordinatensystem des realen Magnetfeldraums aufgespannten Kubus,

Fig. 6    ein von den zu den acht Gitterpunktpositionen gemäß Fig. 5 zugehörigen acht Kalibrierpositionen im dreidimensionalen Kalibrierraum-Koordinatensystem aufgespanntes Raumelement,

Fig. 7    das Raumelement gemäß Fig. 6 mit sechs darin enthaltenen Tetraedern,

Fig. 8    eine Skizze zur Vektordefinition für die Suche eines die Messposition umschließenden Tetraeders.

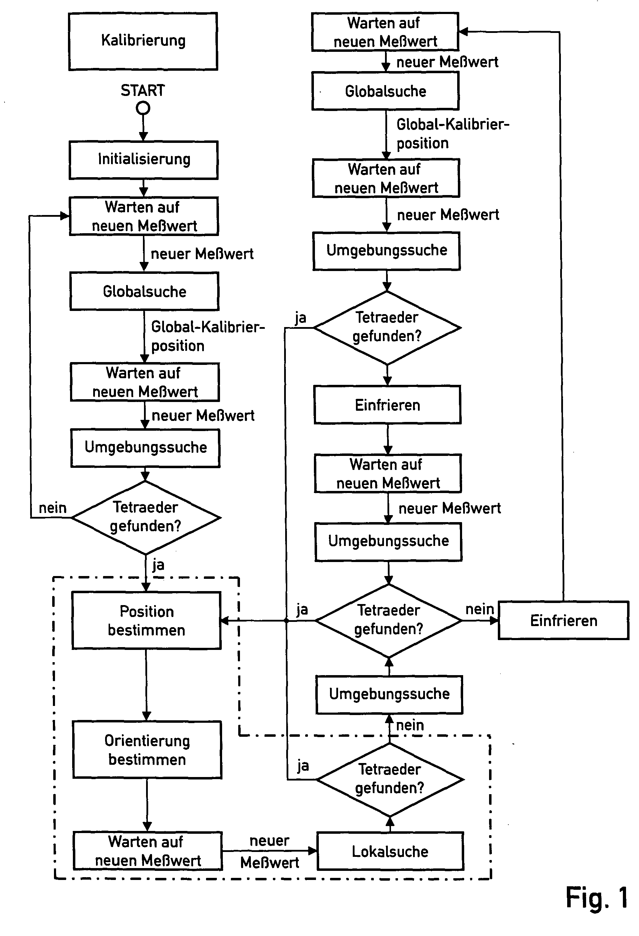

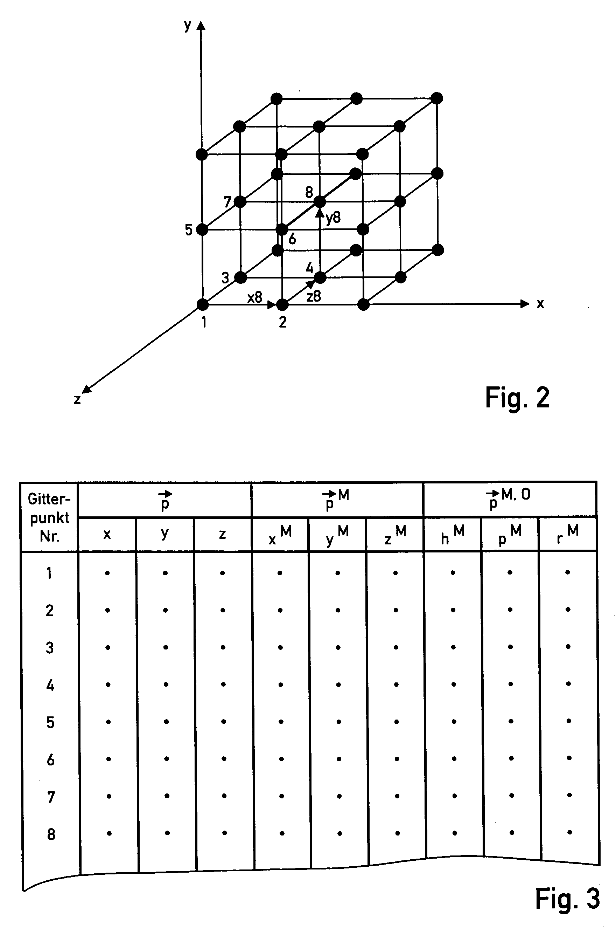

Das im Flussdiagramm der Fig. 1 illustrierte Verfahren dient dazu, die Position und Orientierung eines in einem dreidimensionalen Magnetfeldraum sich bewegenden Magnetfeldsensors auch dann richtig zu bestimmen, wenn das im Magnetfeldraum erzeugte Magnetfeld bereichsweise gestört oder verzerrt ist und in diesen Bereichen der Magnetfeldsensor fehlerhafte Messwerte bezüglich seiner wahren Position und Orientierung liefert. Im folgenden werden die vom Magnetfeldsensor ausgegebenen Messwerte als Messposition und Messorientierung bezeichnet. Dem Verfahren geht ein Kalibriermodus voraus, in dem der Magnetfeldraum in ein dreidimensionales Gitter mit äquidistanten Gitterpunkten strukturiert wird, bei dem vorzugsweise ein Gitterpunkt im Ursprung eines dreidimensionalen Koordinatensystems x, y, z, im folgenden Realraum-Koordinatensystem genannt, liegt. Jeder Gitterpunkt hat damit einen Positionsvektor $\vec{p}$ mit den Koordinaten x, y und z. Ein solches Realraum-Koordinatensystem mit der Gitterstruktur ist ausschnittweise in Fig. 2 dargestellt. Beispielhaft sind dort für den Gitterpunkt 8 die Koordinaten $x_8$, $y_8$ und $z_8$ angegeben. Der Magnetfeldsensor wird nunmehr mit konstanter Ausrichtung oder Orientierung nacheinander in allen Gitterpunkten platziert, und die in jedem Gitterpunkt von dem Magnetfeldsensor gemessenen Messwerte werden als Kalibrierposition und Kalibrierorientierung in Zuordnung zu der realen Position des Gitterpunktes in einer Kalibriertabelle abgespeichert. In Fig. 3 ist ausschnittweise die Kalibriertabelle dargestellt. Jeder Gitterpunkt hat einen Positionsvektor $\vec{p}$ mit den Koordinaten x, y, z im realen Magnetfeldraum, dem ein Positionsvektor $\vec{p}^M$ mit den Kalibrierposition $x^M$, $y^M$ und $z^M$ sowie ein Roatationsvektor der Kalibrierorientierung $\vec{p}^{M,O}$ mit den Orientierungswerten für Gieren (heading) $h^M$, Stampfen (pitch) $p^M$ und Rollen (roll) $r^M$ zugeordnet sind. Die Kalibrierpositionen liegen in einem dreidimensionalen Koordinatensystem des Kalibrierraums, im folgenden Kalibrierraum-Koordinatensystem genannt. Im Gegensatz zu den Gitterposition im realen Magnetfeldraum sind die Kalibrierpositionen im Kalibrierraum nicht äquidistant. Die Kalibrierung wird nur einmal vorgenommen, und nur dann erneut aufgelegt, wenn der Magnetfeldraum und/oder das darin erzeugte Magnetfeld geändert wird.

Die in der Kalibriertabelle enthaltenen Daten werden ggf. noch bearbeitet, um beispielsweise falsche Vorzeichen beim Hemisphärenwechsel zu korrigieren oder durch Interpolation oder Extrapolation fehlende Daten aufzufüllen, die in bestimmten Gitterpunkten nicht gemessen werden konnten. Bei dem nachstehend im einzelnen beschriebenen Verfahren zur Bestimmung der wahren Position und wahren Orientierung des Magnetfeldsensors aus den von ihm gelieferten Messwerten wird zunächst die wahre Position des Magnetfeldsensors im Magnetfeldraum bestimmt und mit dieser dann die wahre Orientierung des Magnetfeldsensors ermittelt. Kernpunkt der Positionsbestimmung ist die Ermittlung von vier Kalibrierpositionen aus der Kalibriertabelle, die in dem Kalibrierraum-Koordinatensystem ein Tetraeder aufspannen, das die vom Magnetfeldsensor aktuell gemessene Messposition einschließt. Ist ein solches Tetraeder gefunden, so wird mit diesen vier Kalibrierpositionen eine linear interpolierende Transformation der Messposition in den realen Magnetfeldraum vorgenommen und die transformierte Messposition als wahre Position des Magnetsensors ausgegeben. Hierzu wird mittels der vier Kalibrierpositionen eine Transformationsmatrix A so bestimmt, dass die vier Kalibrierpositionen korrekt in das Realraum-Koordinatensystem transformiert werden. Mit der so gewonnene Transformationsmatrix wird die Messposition gemäß

$$\vec{p} = A \cdot \vec{p}^M + \vec{p}^{off} \tag{1}$$

in das Realraum-Koordinatensystem transformiert. $\vec{p}^M$ ist dabei die aktuelle Messposition, $\vec{p}$ die wahre Position des Magnetfeldsensors im Realraum-Koordinatensystem und $\vec{p}^{off}$ ein bei der Transformation zu berücksichtigender Offset. Um die Berechnung des Offsets sowohl bei der Berechnung der Transformationsmatrix A als auch bei der Anwendung der Transformationsmatrix A auf die Messposition zur Transformation der Messposition in den realen Magnetfeldraum zu vermeiden, wird zunächst einer der ersten vier Kalibrierpositionen in den Ursprung des dreidimensionalen Kalibrierraum-Koordinatensystems verschoben und die andere Kalibrierpositionen um die Positionskoordinaten der ersten Kalibrierposition verschoben, sowie von den den vier Kalibrierpositionen zugeordneten Gitterpunktpositionen die der ersten Kalibrierposition zugehörige erste Gitterpunktposition in den Ursprung des dreidimensionalen Realraum-Koordinatensystems verschoben und die verbleibenden drei Gitterpunktpositionen um die Positionskoordinaten der ersten Gitterpunktpositionen verschoben. Mit den so verschobenen Kalibrierpositionen $\vec{p}_i^{M,V}$ und Gitterpunktpositionen $\vec{p}_i^V$ wird die Kalibrierposition in das Realraum-Koordinatensystem gemäß

$$\vec{p}_i^{\ V} = A \vec{p}_i^{\ M,V} \text{ mit } i = 1, 2, 3 \tag{2}$$

transformiert. Es ergibt sich ein Gleichungssystem mit neun Gleichungen und neun Unbekannten, das in Matrizenschreibweise wie folgt aussieht:

$$\begin{bmatrix} x_i^{\,V} \\ y_i^{\,V} \\ z_i^{\,V} \end{bmatrix} = \begin{bmatrix} A_{1,1} & A_{1,2} & A_{1,3} \\ A_{2,1} & A_{2,2} & A_{2,3} \\ A_{3,1} & A_{3,2} & A_{3,3} \end{bmatrix} \begin{bmatrix} x_i^{\,M,V} \\ y_i^{\,M,V} \\ z_i^{\,M,V} \end{bmatrix} \qquad (3)$$

Aus diesem Gleichungssystem lassen sich die Elemente $A_{1,1}$, $A_{1,2}$... der Transformationsmatrix A leicht berechnen. Diese Transformationsmatrix wird nunmehr nicht direkt auf die Messposition angewendet, sondern auf eine Messposition, die in gleicher Weise verschoben worden ist, wie die drei Kalibrierpositionen im Kalibrier-Koordinatensystem. Anders ausgedrückt: es wird von dem Positionsvektor der Messposition der Vektor derjenigen Kalibrierposition subtrahiert, die in den Ursprung des dreidimensionalen Kalibrier-Koordinatensystem verschoben worden ist. Die Anwendung der Transformationsmatrix auf die verschobene Messposition $\vec{p}^{\,M,V}$ erfolgt gemäß

$$\vec{p}^{\,V} = A\vec{p}^{\,M,V} \qquad (4).$$

Um aus dieser in den realen Magnetfeldraum transformierten, noch verschobenen Messposition $\vec{p}^{\,V}$ die wahre Position $\vec{p}$ des Magnetfeldsensors zu erhalten, wird die vorgenommene Verschiebung wieder rückgängig gemacht, und zwar dadurch, dass der Positionsvektor der in den Ursprung des Realraum-Koordinatensystems verschobenen Gitterpunktposition zu dem Positionsvektor der transformierten, verschobenen Messposition $\vec{p}^{\,V}$ hinzuaddiert wird.

Ist die wahre Position des Magnetfeldsensors wie vorstehend beschrieben bestimmt, so erfolgt nunmehr die Ermittlung der wahren Orientierung des Magnetfeldsensors. Hierzu wird mit der wahren Position des Magnetfeldsensors eine Korrekturorientierung bestimmt und zur Ermittlung der wahren Orientierung auf die vom Magnetsensor gemessene Messorientierung angewendet. Zur Bestimmung der Korrekturorientierung werden in der Kalibriertabelle acht Kalibrierpositionen ausgesucht, deren zugeordnete Gitterpunktpositionen in dem Realraum-Koordinatensystem einen Kubus aufspannen, der die wahre Position des Magnetfeldsensors umschließt. Mit diesen acht Kalibrierorientierungen wird eine trilineare Interpolation durchgeführt, deren Ergebnis die Korrekturorientierung ergibt. Diese Korrekturorientierung wird entweder auf die Orientierungswerte $h^M$, $p^M$ und $r^M$ einzeln angewendet oder vorzugsweise auf den von diesen Werten gebildeten Rotationsvektor $\vec{p}^{\,M,O}$ angewendet.

Zum Prüfen eines von vier Kalibrierpositionen im Kalibrierraum-Koordinatensystem der Kalibriertabelle aufgespannten Tetraeders daraufhin, ob es die Messposition einschließt oder nicht, im folgenden Tetraederprüfung genannt, wird für alle vier Tetraederflächen eines Tetraeders festgestellt, auf welcher Seite der Tetraederfläche die Messposition liegt. Liegt die Messposition bei allen vier Tetraederflächen auf derselben Seite der Tetraederfläche wie der jeweils nicht zur Tetraederfläche zugehörige vierte Tetraederpunkt, so wird das Tetraeder als das gesuchte erkannt, das die Messposition einschließt.

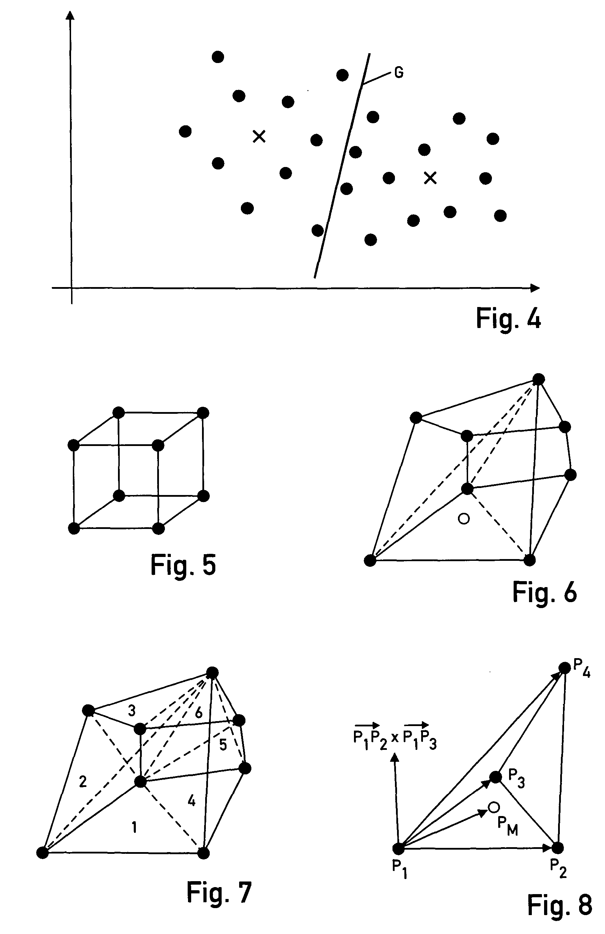

Durch die Verwendung von Tetraederflächen bei der Suche nach der eingeschlossenen Messposition werden Unstetigkeiten bei der interpolierten Magnetfeldsensorposition vermieden. In Fig. 8 ist ein solches von den Kalibrierpositionen aufgespanntes Tetraeder dargestellt. Der Einfachheit halber sind die Eckpunkte des Tetraeders, die jeweils einem Positionsvektor einer Kalibrierposition im Kalibrierraum-Koordinatensystem entsprechen, mit $P_1$, $P_2$, $P_3$ und $P_4$ bezeichnet. Der Positionsvektor der Messposition in dem Kalibrierraum-Koordinatensystem ist mit $P_M$ bezeichnet. Um nun zu erkennen, auf welcher Seite der von den Eckpunkten $P_1$, $P_2$, $P_3$ bzw. $P_1$, $P_2$, $P_4$ bzw. $P_1$, $P_3$, $P_4$ bzw. $P_2$, $P_3$, $P_4$ aufgespannten Tetraederflächen die Messposition liegt, werden, wie dies in der Vektordarstellung der Fig. 8 illustriert ist, zwischen dem ersten Eckpunkt $P_1$ der Tetraederfläche $P_1$, $P_2$, $P_3$ und den beiden Eckpunkten $P_2$ bzw. $P_3$ dieser Tetraederfläche zwei Vektoren $\overrightarrow{P_1P_2}$ bzw. $\overrightarrow{P_1P_3}$ definiert und deren Kreuzprodukt $\overrightarrow{P_1P_2} \times \overrightarrow{P_1P_3}$ berechnet. Dieses Kreuzprodukt ergibt einen Produktvektor, der senkrecht auf den beiden Vektoren steht, also die Normale zu der betrachteten Tetraederfläche $P_1$, $P_2$, $P_3$ ist. Zwischen dem ersten Eckpunkt der Tetraederfläche $P_1$ und den nicht in die Tetraederfläche einbezogenen vierten Tetraederpunkt $P_4$ einerseits und dem ersten Eckpunkt $P_1$ und der Messposition $P_M$ andererseits wird jeweils ein weiterer Vektor $\overrightarrow{P_1P_4}$ und $\overrightarrow{P_1P_M}$ definiert, und es werden die Skalarprodukte des Kreuzproduktvektors mit jedem der weiteren Vektoren $\overrightarrow{P_1P_4}$ bzw. $\overrightarrow{P_1P_M}$ berechnet. Haben die Skalarprodukte das gleiche Vorzeichen, so wird die Messposition $P_M$ als auf der richtigen Seite der betrachteten Tetraederfläche liegend erkannt. Die Berechnung des Kreuzproduktes und der Skalarprodukte wird für jede der vier Tetraederflächen durchgeführt. Wenn die Messposition bei allen Tetraederflächen als auf der richtigen Seite liegend erkannt worden sind, ist das von den vier Tetraederflächen gebildete Tetraeder das gesuchte Tetraeder, das die Messposition einschließt.

Die Suche nach den geeigneten vier Kalibrierpositionen, die die Messposition einschließen und damit zur linearen interpolierenden Transformation der Messposition benutzt werden müssen, wird - wie dies im Flussdiagramm der Fig. 1 illustriert ist - in folgender Weise durchgeführt:

Mit dem Anliefern der ersten Messposition durch den Magnetfeldsensor setzt eine globale Suche in der Kalibriertabelle, im folgenden Globalsuche genannt, ein.

Hierbei wird für alle abgespeicherten Kalibrierpositionen der Tabelle der Abstand von der Messposition bestimmt und diejenige Kalibrierposition mit dem kleinsten Abstand, im folgenden Global-Kalibrierposition genannt, ausgegeben. Um die Rechenzeit für diesen Prozess abzukürzen, wird in einer der Globalsuche vorgeschalteten Initialisierung eine Vorauswahl von Kalibrierpositionen getroffen, die auf den kleinsten Abstand zur Messposition untersucht werden. Hierzu wird die Tabelle in mehrere Tabellenbereiche unterteilt und in jedem Tabellenbereich eine Kumulationsposition definiert. Die Kumulationspositionen werden dabei so festgelegt, dass zu ihrer Ermittlung ungefähr die gleiche Anzahl von Kalibrierpositionen verwendet worden sind. In Fig. 4 ist zur Illustration des Initialisierungsvorgangs ein zweidimensionaler Ausschnitt der in der Tabelle abgespeicherten Kalibrierpositionen durch schwarze Punkte dargestellt. In diesem Ausschnitt sind zwei Tabellenbereiche definiert, die durch die Grenzlinie G voneinander getrennt sind. In jedem Bereich ist eine Kumulationsposition (durch Kreuz markiert) festgelegt. Die Globalsuche wird nun so vorgenommen, dass mit Eintreffen des ersten Messwerts des Magnetfeldsensors nicht der Abstand der Messposition von allen Kalibrierpositionen, sondern lediglich der Abstand der Messposition von den Kumulationspositionen bestimmt wird. Die Kumulationsposition mit dem kleinsten Abstand von der Messposition wird als Global-Kalibrierposition ausgegeben.

Mit dem nächsten Messwert wird ausgehend von der Global-Kalibrierposition eine sog. Umgebungssuche durchgeführt. Bei der Umgebungssuche wird eine Vielzahl von Kalibrierpositionen, deren zugehörige Gitterpunktpositionen im realen Magnetfeldraum eine Mehrzahl von aneinanderstoßenden Kuben um eine zentrale Gitterpunktposition herum aufspannen, definiert. In Fig. 2 sind beispielsweise acht aneinanderstoßende Kuben dargestellt, die um die zentrale Gitterpunktposition (Gitterpunkt 8) herum aufgespannt sind. Als zentrale Gitterpunktposition (Gitterpunkt 8) wird die Gitterpunktposition, die der in der Globalsuche ermittelten Global-Kalibrierposition zugehörig ist, festgelegt. Wie aus dem Vergleich von Fig. 5 und 6 zu erkennen ist, sind den acht Gitterpunktpositionen eines jeden Kubus acht Kalibrierpositionen in der Kalibriertabelle zugeordnet, die zusammen ein achteckiges, unsymmetrisches Raumelement in dem Kalibrierraum-Koordinatensystem aufspannen. Wie Fig. 7 zeigt, lässt sich dieses Raumelement in sechs Tetraeder unterteilen. Im Ausführungsbeispiel mit acht definierten Kuben ergeben sich acht Raumelemente mit jeweils sechs Tetraeder. Bei der Umgebungssuche wird nunmehr für jedes der Tetraeder eine Tetraederprüfung durchgeführt, wie sie vorstehend beschrieben worden ist. Wird bei der Umgebungssuche kein Tetraeder gefunden, das das Prüfkriterium erfüllt, so wird mit dem nächsten Messwert die Globalsuche erneut gestartet und danach eine neuerliche Umgebungssuche durchgeführt. Ist bei der Umgebungssuche ein die Messposition umschließender Tetraeder gefunden worden, so wird die Prüfung weiterer Tetraeder gestoppt und mit den das gefundenen Tetraeder definierenden Kalibrierpositionen die linear interpolierende Transformation, wie sie eingangs beschrieben worden ist, durchgeführt. Nach der so bestimmten wahren Position des Magnetfeldsensors wird dessen wahre Orientierung ermittelt und der nächste Messwert vom Magnetfeldsensor abgewartet.

Trifft ein neuer Messwert ein, so wird in der Kalibriertabelle zum Aufsuchen der geeigneten vier Kalibrierpositionen, die in dem Kalibrierraum-Koordinatensystem das die Messposition einschließende Tetraeder aufspannen, eine Lokalsuche gestartet. Hierzu werden acht Kalibrierpositionen verwendet, deren zugehörige Gitterpositionen im Realraum-Korrdinatensystem einen Kubus beschreiben, wie er in Fig. 5 dargestellt ist. Die diesem Kubus zugehörigen acht Kalibrierpositionen definieren in dem Kalibrierraum-Koordinatensystem ein achteckiges Raumelement, wie es in Fig. 6 dargestellt ist. Dieses Raumelement enthält wiederum sechs Tetraeder, wie sie in Fig. 7 mit den Ziffern 1 bis 6 gekennzeichnet sind. Bei der Lokalsuche wird für jedes der sechs Tetraeder eine Tetraederprüfung wie beschrieben durchgeführt. Bei der Lokalsuche wird ein solcher Kubus bzw. ein dazugehöriges Raumelement ausgewählt, in dem in dem vorausgegangenen Messzyklus ein die Messposition umschließendes Tetraeder gefunden worden ist. Allgemein wird die Auswahl des Kubus durch Prädiktion anhand vorausgegangener Messzyklen bestimmt, wobei sich die im vorausgegangenen Messzyklus gefundene wahre Position als einfachste Prädiktion anbietet. Wird bei der Lokalsuche ein die Messposition umschließendes Tetraeder gefunden, so wird mit den das Tetraeder festlegenden vier Kalibrierpositionen die linear interpolierende Transformation der Messposition durchgeführt und mit der dadurch erhaltenen wahren Position des Magnetfeldsensors die wahre Orientierung des Messfeldsensors bestimmt. Danach wird auf den nächsten vom Magnetfeldsensor gelieferten Messwert gewartet. Da in aller Regel ein Tetraeder gefunden wird, das die Messposition des neuen aktuellen Messwerts einschließt, wird das Verfahren zum großen Teil innerhalb des in Fig. 1 strichpunktiert eingerahmten Verfahrensabschnitts ablaufen.

Wird bei der Lokalsuche nach Prüfung aller sechs Tetraeder kein passendes Tetraeder gefunden, so wird eine Umgebungssuche durchgeführt, wie sie vorstehend beschrieben worden ist. Als zentrale Gitterpunktposition, um die herum die aneinanderstoßenden Kuben aufgespannt werden, wird eine prädiktierte Gitterpunktposition gewählt, wobei die Prädiktion anhand vorausgegangener Messzyklen erfolgt. Im einfachsten Fall wird diejenige Gitterpunktposition als zentrale Gitterpunktposition prädiktiert, die der im vorausgegangenen Messzyklus bestimmten wahren Position am nächsten liegt. Wird hierbei das passende Tetraeder gefunden, so setzt wiederum die Positionsbestimmung und Orientierungsbestimmung ein, und es wird der nächste Messwert abgewartet. Wird auch in der Umgebungssuche kein passendes Tetraeder gefunden, so werden die in dem vorhergehenden Messzyklus ermittelten Werte für die wahre Position und die wahre Orientierung des Magnetsensors "eingefroren", d. h. beibehalten und aufgrund des aktuellen Messwerts nicht verändert, und der nächste Messwert abgewartet.

Da mit dem Einfrieren die Positionsverfolgung unterbrochen worden ist, wird mit dem nächsten neuen Messwert des Magnetfeldsensors die Globalsuche wie vorstehend beschrieben durchgeführt und dabei die Global-Kalibrierposition ermittelt. Mit dem Messwert und der bestimmten Global-Kalibrierposition wird eine Umgebungssuche durchgeführt, und zwar in der gleichen Weise wie beschrieben. Wird bei der Umgebungssuche das passende Tetraeder gefunden, so wird mit dessen Kalibrierposition wiederum die wahre Position und danach die wahre Orientierung des Magnetfeldsensors bestimmt. Ist auch bei dieser Umgebungssuche kein passendes Tetraeder gefunden worden, so werden die im vorhergehenden Messzyklus bestimmten Werte für wahre Position und wahre Orientierung des Magnetfelssensors "eingefroren" und der nächste Messwert abgewartet. Mit dem nächsten neuen Messwert wird eine neuerliche Umgebungssuche durchgeführt und bei Auffinden eines passenden Tetraeders eine Positions- und Orientierungsbestimmung ausgelöst und bei Nichtauffinden eines passenden Tetraeders ein erneutes Einfrieren der im vorausgegangenen Messzyklus bestimmten wahren Werte von Position und Orientierung vorgenommen, woraufhin mit dem nächsten neuen Messwert eine Globalsuche gestartet wird.

## Patentansprüche

1. Verfahren zum Bestimmen und Verfolgen einer von einem Magnetfeldsensor innerhalb eines dreidimensionalen Magnetfeldraums eingenommenen, sich verändernden, wahren Position und Orientierung aus von dem Magnetfeldsensor als Messposition und Messorientierung gemessenen Messwerten, bei dem in einem Kalibriermodus der Magnetfeldraum in ein dreidimensionales Gitter mit äquidistanten Gitterpunkten strukturiert wird und die von dem mit konstanter Orientierung nacheinander in allen Gitterpunkten platzierten Magnetfeldsensor gemessenen Messwerte als Kalibrierpositionen und Kalibrierorientierungen in Zuordnung zu den realen Positionen der Gitterpunkte im dreidimensionalen Koordinatensystem des realen Magnetfeldraums (Realraum-Koordinatensystem) in einer Kalibriertabelle abgespeichert werden, **dadurch gekennzeichnet, dass** für die fortlaufend gemessenen, aktuellen Messwerte des Magnetfeldsensors jeweils mit vier aus der Kalibriertabelle entnommene Kalibrierpositionen, die in einem dreidimensionalen Koordinatensystem der abgespeicherten Kalibrierpositionen (Kalibrierraum-Koordinatensystem) ein die Messposition einschließendes Tetraeder aufspannen, eine linear interpolierende Transformation der Messposition in das Realraum-Koordinatensystem vorgenommen und die transformierte Messposition als wahre Position des Magnetsensors ausgegeben wird.

2. Verfahren nach Anspruch 1, **dadurch gekennzeichnet, dass** mittels der vier Kalibrierpositionen eine Transformationsmatrix (A) so bestimmt wird, dass die vier Kalibrierpositionen korrekt in das Realraum-Koordinatensystem transformiert werden, und dass die Messposition mittels der Transformationsmatrix (A) transformiert wird.

3. Verfahren nach Anspruch 2, **dadurch gekennzeichnet, dass** vor der Transformation ein erster der vier Kalibrierpositionen in den Ursprung des Kalibrierraum-Koordinatensystems verschoben wird und die anderen drei Kalibrierpositionen um die Positionskoordinaten der ersten Kalibrierposition verschoben werden, sowie von den den vier Kalibrierpositionen zugeordneten vier Gitterpunktpositionen die der ersten Kalibrierposition zugehörige erste Gitterpunktposition in den Ursprung des Realraum-Koordinatensystems verschoben wird und die anderen drei Gitterpunktpositionen um die Positionskoordinaten der ersten Gitterpunktposition verschoben werden und dass die Transformation mit den verschobenen Kalibrierpositionen ($\vec{p}_i{}^{M,V}$) und den verschobenen Gitterpunktpositionen ($\vec{p}_i{}^{V}$) gemäß

$$\vec{p}_i{}^{V} = A\vec{p}_i{}^{M,V} \text{ mit } i = 1, 2, 3 \tag{1}$$

durchgeführt wird.

4. Verfahren nach Anspruch 3, **dadurch gekennzeichnet, dass** die Transformationsmatrix (A) auf die um die Positionskoordinaten der ersten Kalibrierposition verschobene Messposition ($\vec{p}^{M,V}$) gemäß

$$\vec{p}^{V} = A\vec{p}^{M,V} \tag{2}$$

angewendet und nach der Transformation die Verschiebung im Realraum-Koordinatensystem wieder rückgängig gemacht wird.

**5.** Verfahren nach einem der Ansprüche 1 - 4, **dadurch gekennzeichnet, dass** zum Prüfen eines Tetraeders auf Einschluss der Messposition festgestellt wird, auf welcher Seite der Tetraederflächen die Messposition liegt, und dass die Messposition als im Tetraeder eingeschlossen erkannt wird, wenn die Messposition bei allen vier Tetraederflächen auf derselben Seite der Tetraederfläche liegt wie der jeweils nicht in die Tetraederfläche einbezogene vierte Tetraederpunkt.

**6.** Verfahren nach Anspruch 5, **dadurch gekennzeichnet, dass** zwischen einem ersten Eckpunkt ($P_1$) der Tetraederfläche und den beiden anderen Eckpunkten ($P_2$, $P_3$) zwei Vektoren definiert und deren Kreuzprodukt berechnet wird, dass zwischen dem ersten Eckpunkt ($P_1$) der Tetraederfläche und dem nicht in die Tetraederfläche einbezogenen vierten Tetraederpunkt ($P_4$) einerseits und der Messposition ($P_M$) andererseits jeweils ein weiterer Vektor definiert wird, dass die Skalarprodukte des sich aus dem Kreuzprodukt ergebenden, die Normale zur Tetraederfläche bildenden Kreuzproduktvektors mit jedem der weiteren Vektoren berechnet werden, und dass die Messposition als auf der richtigen Seite der Tetraederfläche liegend erkannt wird, wenn die Skalarprodukte das gleiche Vorzeichen haben.

**7.** Verfahren nach Anspruch 5 oder 6, **dadurch gekennzeichnet, dass** das Bestimmen der Kalibrierpositionen, die das die Messposition einschließende Tetraeder aufspannen, mittels Lokalsuche in einem von acht Kalibrierpositionen im Kalibrierraum-Koordinatensystem aufgespannten Raumelement durchgeführt wird, die acht einen Kubus im Realraum-Koordinatensystem beschreibenden Gitterpunktpositionen zugehörig sind, indem für jedes der in dem Raumelement enthaltenen sechs Tetraeder eine Tetraederprüfung durchgeführt wird.

**8.** Verfahren nach Anspruch 7, **dadurch gekennzeichnet, dass** ein solcher Kubus ausgewählt wird, in dem eine anhand mindestens eines vorausgegangenen Messzyklusses prädiktierte wahre Position liegt.

**9.** Verfahren nach einem der Ansprüche 5 - 8, **dadurch gekennzeichnet, dass** zum Bestimmen der Kalibrierposition, die das die Messposition einschließende Tetraeder aufspannen, mittels Umgebungssuche in einem von Kalibrierpositionen im Kalibrierraum-Koordinatensystem aufgespannten Raumelement durchgeführt wird, deren zugehörige Gitterpunktpositionen im Realraum-Koordinatensystem eine Mehrzahl von aneinanderstoßenden, um eine zentrale Gitterpunktposition gruppierten Kuben beschreiben, indem für jedes der im Raumelement enthaltenen Tetraeder eine Tetraederprüfung durchgeführt wird.

**10.** Verfahren nach einem der Ansprüche 7 - 9, **dadurch gekennzeichnet, dass** die Tetraederprüfung abgebrochen wird, sobald ein die Messposition einschließendes Tetraeder gefunden wird.

**11.** Verfahren nach Anspruch 9 oder 10, **dadurch gekennzeichnet, dass** als zentrale Gitterpunktposition diejenige Gitterpunktposition gewählt wird, die einer anhand mindestens eines vorausgegangenen Messzyklusses prädiktierten wahren Position am nächsten liegt.

**12.** Verfahren nach Anspruch 9 oder 10, **dadurch gekennzeichnet, dass** als zentrale Gitterpunktposition diejenige Gitterpunktposition gewählt wird, deren zugehörige Kalibrierposition einer Global-Kalibrierposition am nächsten liegt, die in einer im Kalibrierraum-Koordinatensystem durchgeführten Globalsuche ermittelt wird.

**13.** Verfahren nach Anspruch 12, **dadurch gekennzeichnet, dass** bei der Globalsuche für alle in der Kalibriertabelle abgespeicherten Kalibrierpositionen der Abstand von der Messposition bestimmt und die Kalibrierposition mit dem kleinsten Abstand als Global-Kalibrierposition ausgegeben wird.

**14.** Verfahren nach Anspruch 12, **dadurch gekennzeichnet, dass** die Kalibriertabelle in mehrere Tabellenbereiche unterteilt wird und für jeden Tabellenbereich eine Kumulationsposition definiert wird und dass bei der Globalsuche der Abstand der Messposition von den Kumulationspositionen bestimmt und die Kumulationsposition mit dem kleinsten Abstand als Global-Kalibrierposition ausgegeben wird.

**15.** Verfahren nach Anspruch 14, **dadurch gekennzeichnet, dass** die Tabellenbereiche so festgelegt werden, dass jede Kumulationsposition mit einer ungefähr gleich großen Anzahl von Kalibrierpositionen bestimmt wird.

**16.** Verfahren nach einem der Ansprüche 1 - 15, **dadurch gekennzeichnet, dass** mit der bestimmten wahren Position des Magnetfeldsensors eine Korrekturorientierung ermittelt und zur Bestimmung der wahren Orientierung des Magnetfeldsensors auf die Messorientierung angewandt wird.

17. Verfahren nach Anspruch 16, **dadurch gekennzeichnet, dass** zur Ermittlung der Korrekturorientierung mit den Kalibrierorientierungen, deren zugeordnete Gitterpunktpositionen im Realraum-Koordinatensystem einen die wahre Position einschließenden Kubus aufspannen, eine trilineare Interpolation durchgeführt wird.

**Fig. 1**

## Fig. 2

| Gitter-punkt Nr. | $\vec{p}$ | | | $\vec{p}^M$ | | | $\vec{p}^{M,0}$ | | |
|:---:|:---:|:---:|:---:|:---:|:---:|:---:|:---:|:---:|:---:|
| | x | y | z | $x^M$ | $y^M$ | $z^M$ | $h^M$ | $p^M$ | $r^M$ |
| 1 | • | • | • | • | • | • | • | • | • |
| 2 | • | • | • | • | • | • | • | • | • |
| 3 | • | • | • | • | • | • | • | • | • |
| 4 | • | • | • | • | • | • | • | • | • |
| 5 | • | • | • | • | • | • | • | • | • |
| 6 | • | • | • | • | • | • | • | • | • |
| 7 | • | • | • | • | • | • | • | • | • |
| 8 | • | • | • | • | • | • | • | • | • |

## Fig. 3

Fig. 4

Fig. 5

Fig. 6

Fig. 7

Fig. 8